# EUROPEAN PATENT SPECIFICATION

(11) **EP 0 856 260 B1**
(45) Date of publication and mention of the grant of the patent: **19.12.2001**
(21) Application number: 98200291.7
(22) Date of filing: 02.02.1998
(51) Int. Cl.: A23J 1/10, C08H 1/06

(54) **Method and apparatus for producing dry pieces of collagen containing material.**
Verfahren und Vorrichtung zur Herstellung von Trockenstücken aus Kollagenmaterial
Méthode et appareil pour produire des morceaux secs de matériau collagénique

(30) Priority: 31.01.1997 NL 1005161
(43) Date of publication of application: 05.08.1998
(73) Proprietor: Hermon B.V., 7131 ND Lichtenvoorde (NL)
(72) Inventor: Roelofs, Andreas Henricus Cornelis, 7136 MH Zieuwent (NL)
(74) Representative: Smulders, Theodorus A.H.J., Ir.

(56) References cited:
- WO-A-89/11799
- WO-A-92/10944
- GB-A- 2 054 344

## Description

The invention relates to a method for producing dry pieces of collagen-containing material from the hide tissue, in particular the hide connective tissue, of an animal, wherein the pieces of collagen-containing material comprise the original structure of the tissue, and wherein the method at least comprises processing steps in which a sheet comprising the hide tissue of the animal is comminuted, washed and dried.

The invention also relates to an apparatus for producing dry pieces of collagen-containing material from the hide tissue, in particular the hide connective tissue, of an animal, wherein the pieces of collagen-containing material comprise the original structure of the tissue, and wherein the apparatus is provided with a processing track for processing a sheet comprising the hide tissue of the animal, which processing track at least comprises a comminuting unit, a washing unit and a drying unit.

A method and an apparatus for producing dry pieces of collagen-containing material are known per se. Such known methods and apparatuses are described, e.g., in European patent application 0 563 188 and International patent application WO/89/11799.

One of the known raw materials used for recovering collagen-containing materials is, e.g., the hide tissue of cattle hides. This hide tissue is released when cattle hides are processed to obtain leather. The extent to which this released hide material is easy or difficult to process, depends, among other things, on the animal from which the hide originates and the manner in which the hide, before being processed into leather, is treated. Thus, the age, the feed, the geographic habitat, and the sex of the animal are factors that may influence the quality of the hide. It is also relevant whether the hide is fresh and cooled, or otherwise preserved when arriving in the tannery. In addition, the treatments of the hide, up to and including the separation of the hide (connective) tissue in the tannery, have a substantial influence on the eventual structure of the collagen matrix and, consequently, a substantial influence on the degree of processability into final products.

In the known processes, the sheet, before being washed and dried, is comminuted into small pieces of material having dimensions of, e.g., 5-10 mm by 3-5 mm. Comminuting, which is carried out, e.g., by cutting, chopping or grinding the sheet, involves the problem that it is very difficult to carry out. The collagen matrix is often rather tough and smooth, so that it is very difficult to comminute. Consequently, after comminution, the resulting pieces of collagen-containing material are sometimes not completely separated from each other and have mutually widely varying dimensions, which, downstream in the production track, may cause problems like blockage and stagnation of the production capacity.

The object of the invention is to meet this problem. To this end, the process according to the invention is characterized in that the sheet, after washing, is mildly dried at a temperature of 40-60°C, such that the dried sheet obtains a moisture content of 10-35%, based on the total weight, and that the dried sheet is then comminuted such that the resulting dry pieces of collagen-containing material have a volume of 25-5000 mm³.

The invention is based on the insight that comminuting the sheet in the "wet", "fresh" condition can be avoided and, instead, can be carried out only at a later stage.

Comminuting the dried sheet according to the invention has the advantage that this sheet has hardened and, accordingly, can rather easily undergo a comminuting treatment. This comminuting treatment can be carried out, e.g., by chopping, cutting or grinding. It is found that in the method according to the invention drying at the relatively low temperature of 40-60°C is quite possible and that there is thus effected a mild dry preservation without the risk of gelatinization, which means that during drying the collagen matrix retains its original structure as much as possible. In addition, the sheet is protected from decay to a certain extent. Moreover, drying at lower temperatures, in particular in combination with mechanical dehydration prior to drying, results in a substantial saving of energy.

British patent application 2 054 344 likewise describes a process wherein a tissue of an animal is first of all dried and is then comminuted. However, these are not hide tissues but tissues like ligaments, sinews, gristle etc. The object of the process according to the British patent application is to process the above tissues such as to yield a powdered material in which the collagen matrix, i.e. the original tissue structure is completely destructed. To this end, the tissue is dried at a temperature exceeding 80°C. Furthermore, the dried tissue is comminuted into powder grains having a volume of less than 8 mm³. There is thus obtained a protein powder in which the original tissue structure is completely destructed. Not obtained, therefore, are pieces of collagen-containing material having a volume of 25-5000 mm³ with a preserved, i.e. undestructed, tissue structure. Consequently, it is not known from the British patent application to dry at 40-60°C to obtain dried tissues having a moisture content of 10-35%, based on the total weight. Nor is it known from the British patent application to comminute into pieces of material each having a volume of 25-5000 mm³. According to the invention, in particular the sheet is dried such that the dried sheet has a moisture content of 10-20%, based on the total weight.

According to another aspect of the invention, the sheet is washed with a liquid, prior to drying. In particular, the sheet is washed in a liquid bath.

Beside the improved manner of comminuting, the invention offers the advantage that washing complete sheets, i.e. complete hides or hide parts, can be very effectively accomplished, e.g. by placing the sheets in rotary vessels. The total amount of liquid required therefor can be kept relatively low. In this connection, e.g. 180-300% liquid, based on the total weight of the sheet, could be considered. This is in contrast with the known techniques in which the comminuted pieces are washed, where, instead of an amount of 180-300% of liquid, an amount of 300-2000% of liquid is common. The temperature of the liquid is preferably 10-40°C. If the temperature were higher, the structure of the tissue would be lost. It is found that at a temperature of less than 10°C washing is not properly possible, because at such a temperature the sheets are too stiff.

The liquid often consists of water with added chemicals to neutralize the acidity of the sheets. Moreover, not comminuting is found to have the advantage that as a result of the strong kneading action the exchange and the reaction of chemicals during washing of non-comminuted sheets proceeds much faster than with the known techniques wherein comminuted pieces of collagen-containing material are washed.

The apparatus according to the invention is characterized in that the comminuting unit is placed in the processing track downstream of the drying unit, the drying unit is arranged to dry at a mild temperature of 40-60°C the sheet washed by means of the washing unit, such that the dried sheet has a moisture content of 10-35%, based on the total weight, and wherein the comminuting unit is arranged to comminute the dried sheet into pieces of collagen-containing material having a volume of 25-5000 mm³.

The invention will now be explained in more detail with reference to the accompanying drawings, in which:

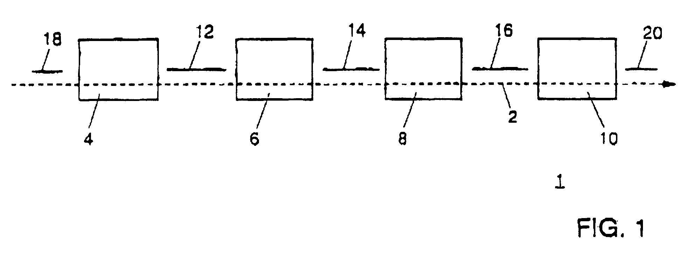

Fig. 1 diagrammatically shows a possible embodiment of an apparatus according to the invention for carrying out a method according to the invention.

Fig. 1 shows at reference numeral 1 an apparatus for producing dry pieces of collagen-containing material from a sheet comprising a hide tissue of an animal.

The sheet to be processed moves along a processing track 2, which is shown in Fig. 1 by a dotted arrow. The apparatus comprises, among other things, at the beginning of the processing track 2, a washing unit 4 known per se. In this example, the washing unit 4 comprises a liquid bath contained in a rotary drum (not shown). The liquid in the rotary drum consists of water including chemicals for neutralizing the acidity of the sheet to be processed. Downstream of the washing unit a dehydrating unit 6 is included in the processing track. Furthermore, the apparatus comprises a drying unit 8 downstream of the dehydrating unit and a comminuting unit 10 downstream of the drying unit.

In this example a conveying device 12 for conveying sheets from the washing unit 4 to the dehydrating unit 6 is interposed between the washing unit 4 and the dehydrating unit 6. Similarly, a conveying device 14 is interposed between the dehydrating unit 6 and the drying unit 8, and a conveying device 16 is interposed between the drying unit 8 and the comminuting unit 10. Furthermore, in this example sheets are carried to the washing unit 4 by means of a conveying device 18.

The operation of the apparatus is as follows. By means of the conveying device 18 sheets to be processed are successively carried to the washing unit 4. Apart from that, these sheets may also be carried to the washing unit 4 in batches of several sheets. However, this is not relevant to the invention.

In this example the sheets consist of hide tissue, in particular hide connective tissue. These are tissues, in particular connective tissues, from the hide of an animal. A sheet may also consist of a part of the (connective) tissue of a hide of an animal, e.g., the (connective) tissue of a part of the hide originating from the back, groin and neck parts of the animal. The sheet may also consist of the calcified (connective) tissue of cattle hides, which is released during processing of fresh and/or salted cattle hides in the tanneries.

The sheet is washed in the washing unit 4. The chemicals dissolved in the liquid in which the sheet is washed ensure that the pH value of the sheet is neutralized to a pH value of about 6-8, in particular of about 7. The amount of liquid required for washing the sheet may be kept relatively low. The weight of (the amount of) the liquid required for cleaning a sheet is, e.g., 180-300% of the weight of the above sheet. The temperature of the liquid is 10-40°C.

After washing, the sheet is carried to the dehydrating unit 6 by means of the conveying device 12. In the dehydrating unit 6 the sheet is partly dehydrated mechanically by compressing the sheet. Dehydrating the sheet may be carried out in a manner known per se. The sheet thus dehydrated is carried to the drying unit 8 by means of the conveying device 14. In the drying unit 8 the sheet is dried in a manner known per se. Drying is carried out at a temperature of 40-60°C. To this end, the drying unit 8 may be provided with, e.g., heating means. In addition, in this example the drying unit comprises means for generating a gas stream by means of which the sheet is dried. After drying, the dried sheet has a moisture content of 10-35%, based on the total weight of the sheet, but preferably, the moisture content after drying is 10-20%, more in particular 12-18%. The sheet thus dried is carried to the comminuting unit 10 by means of the conveying device 16. The comminuting unit 10 comprises means, known per se, for comminuting the dried sheet by means of, e.g., chopping, cutting or grinding to obtain pieces of dry collagen-containing material. Because the dried sheet has a rigid structure, comminuting can be carried out readily and reliably manner. The dried sheet is comminuted such that the dry pieces of collagen-containing material each have a volume of 25-5000 mm³. The dry pieces of collagen-containing material thus obtained are then carried away by means of a conveying device 20.

The invention is by no means limited to the above-described embodiment.

Thus, conveyance between the washing unit 4, the dehydrating unit 6, the drying unit 8 and/or the comminuting unit 10 may also be carried out manually, instead of by means of conveying devices. Washing the sheets may also be carried out in a manner other than by means of a liquid.

Such variants are all deemed to fall within the scope of the invention.

## Claims

1. A method for producing dry pieces of collagen-containing material from the hide tissue, in particular the hide connective tissue of an animal, wherein the pieces of collagen-containing material comprise the original structure of the tissue, and wherein the method at least comprises processing steps in which a sheet comprising the hide tissue of the animal is comminuted, washed and dried, **characterized in that** the sheet, after washing, is mildly dried at a temperature of 40-60°C, such that the dried sheet obtains a moisture content of 10-35%, based on the total weight, and that the dried sheet is then comminuted such that the resulting dry pieces of collagen-containing material have a volume of 25-5000 mm³.

2. A method according to claim 1, **characterized in that** the sheet is dried such that the dried sheet has a moisture content of 10-20%, based on the total weight.

3. A method according to any one of the preceding claims, **characterized in that** the sheet, prior to drying, is washed with a liquid having a temperature of 10-40°C.

4. A method according to claim 3, **characterized in that** the sheet is washed in a liquid bath.

5. A method according to claim 3 or 4, **characterized in that** the sheet is washed with a liquid which neutralizes the acidity of the sheet.

6. A method according to claim 5, **characterized in that** the pH value of the neutralized sheet is about 6-8.

7. A method according to any one of the preceding claims, **characterized in that** the sheet, after washing and prior to drying, is at least partly dehydrated by compressing the sheet.

8. A method according to any one of the preceding claims, **characterized in that** the sheet comprising the hide tissue of an animal consists of hide tissue released during processing of the hide of the animal or parts thereof into leather.

9. A method according to claim 8, **characterized in that** said sheet is directly manufactured from a cooled fresh hide or parts thereof.

10. A method according to any one of the preceding claims, **characterized in that** the sheet is dried by a heated gas stream.

11. A method according to any one of the preceding claims, **characterized in that** the sheet is comminuted by chopping or cutting and/or grinding.

12. A method according to any one of the preceding claims, **characterized in that** the method is carried out for a number of sheets, said sheets being processed successively or in batches.

13. An apparatus for producing dry pieces of collagen-containing material from the hide tissue, in particular the hide connective tissue of an animal, said pieces of collagen-containing material comprising the original structure of the tissue, and said apparatus being provided with a processing track for processing a sheet comprising the hide tissue of the animal, said processing track at least comprising a comminuting unit, a washing unit and a drying unit, **characterized in that** the comminuting unit is placed in the processing track downstream of the drying unit, the drying unit is arranged to dry the sheet washed by means of the washing unit at a mild temperature of 40-60°C, such that the dried sheet has a moisture content of 10-35%, based on the total weight, said comminuting unit being arranged to comminute the dried sheet into pieces of collagen-containing material having a volume of 25-5000 mm³.

14. An apparatus according to claim 13, **characterized in that**, in use, the drying unit dries the sheet such that the dried sheet has a moisture content of 10-20%, based on the total weight.

15. An apparatus according to claim 13 or 14, **characterized in that** the washing unit at least comprises a liquid bath in which, in use, the sheet is washed, said liquid bath having a temperature of 10-40°C.

16. An apparatus according claim 15, **characterized in that** the liquid bath comprises a liquid which, in use, neutralizes the acidity of the sheet.

17. An apparatus according to any one of the preceding claims 13-16, **characterized in that** the apparatus is further provided with a dehydrating unit which, downstream of the washing unit and upstream of the drying unit, is included in the processing track to at least partly dehydrate the washed sheet mechanically by compressing the sheet.

18. An apparatus according to any one of the preceding claims 13-17, **characterized in that** the drying unit comprises means for generating a gas stream by means of which the sheet, in use, is dried.

## Patentansprüche

1. Verfahren zur Herstellung trockener Stücke aus collagenhaltigem Material aus dem Hautgewebe, insbesondere dem Hautbindegewebe eines Tieres, wobei die Stücke aus collagenhaltigem Material die ursprüngliche Struktur des Gewebes umfassen und wobei das Verfahren wenigstens Verfahrensschritte umfasst, bei denen eine Schicht, die das Hautgewebe des Tieres umfasst, zerkleinert, gewaschen und getrocknet wird, **dadurch gekennzeichnet, dass** die Schicht nach dem Waschen bel einer Temperatur von 40-60 °C schonend getrocknet wird, so dass die getrocknete Schicht einen Feuchtigkeitsgehalt von 10-35% erhält, bezogen auf das Gesamtgewicht, und dass die getrocknete Schicht dann zerkleinert wird, so dass die resultierenden trockenen Stücke aus collagenhaltigem Material ein Volumen von 25-5000 mm³ haben.

2. Verfahren gemäß Anspruch 1, **dadurch gekennzeichnet, dass** die Schicht so getrocknet wird, dass die getrocknete Schicht einen Feuchtigkeitsgehalt von 10-20% hat, bezogen auf das Gesamtgewicht.

3. Verfahren gemäß einem der vorstehenden Ansprüche, **dadurch gekennzeichnet, dass** die Schicht vor dem Trocknen mit einer Flüssigkeit mit einer Temperatur von 10-40 °C gewaschen wird.

4. Verfahren gemäß Anspruch 3, **dadurch gekennzeichnet, dass** die Schicht in einem Flüssigkeitsbad gewaschen wird.

5. Verfahren gemäß Anspruch 3 oder 4, **dadurch gekennzeichnet, dass** die Schicht mit einer Flüssigkeit gewaschen wird, die die Acidität der Schicht neutralisiert.

6. Verfahren gemäß Anspruch 5, **dadurch gekennzeichnet, dass** der pH-Wert der neutralisierten Schicht etwa 6-8 beträgt.

7. Verfahren gemäß einem der vorstehenden Ansprüche, **dadurch gekennzeichnet, dass** die Schicht nach dem Waschen und vor dem Trocknen durch Pressen der Schicht wenigstens teilweise entwässert wird.

8. Verfahren gemäß einem der vorstehenden Ansprüche, **dadurch gekennzeichnet, dass** die Schicht, die das Hautgewebe eines Tieres umfasst, aus Hautgewebe besteht, das bei der Verarbeitung der Haut des Tieres oder von Teilen davon zu Leder abfällt.

9. Verfahren gemäß Anspruch 8, **dadurch gekennzeichnet, dass** die Schicht direkt aus einer gekühlten frischen Haut oder Teilen davon hergestellt wird.

10. Verfahren gemäß einem der vorstehenden Ansprüche, **dadurch gekennzeichnet, dass** die Schicht mit einem erhitzten Gasstrom getrocknet wird.

11. Verfahren gemäß einem der vorstehenden Ansprüche, **dadurch gekennzeichnet, dass** die Schicht durch Schnitzeln oder Schneiden und/oder Mahlen zerkleinert wird.

12. Verfahren gemäß einem der vorstehenden Ansprüche, **dadurch gekennzeichnet, dass** das Verfahren für mehrere Schichten durchgeführt wird, wobei die Schichten nacheinander oder chargenwelse verarbeitet werden.

13. Vorrichtung zur Herstellung trockener Stücke aus collagenhaltigem Material aus dem Hautgewebe, insbesondere dem Hautbindegewebe eines Tieres, wobei die Stücke aus collagenhaltigem Material die ursprüngliche Struktur des Gewebes umfassen und die Vorrichtung mit einer Verarbeitungsstrecke zur Verarbeitung einer Schicht, die das Hautgewebe des Tieres umfasst, versehen ist, wobei die Verarbeitungsstrecke wenigstens eine Zerkleinerungseinheit, eine Wascheinheit und eine Trockeneinheit umfasst, **dadurch gekennzeichnet, dass** die Zerkleinerungseinheit in der Verarbeitungsstrecke der Trockeneinheit nachgeschaltet ist, wobei die Trockeneinhelt so angeordnet ist, dass die mittels der Wascheinheit gewaschene Schicht bei einer milden Temperatur von 40-60 °C getrocknet wird, so dass die getrocknete Schicht einen Feuchtigkeitsgehalt von 10-35% hat, bezogen auf das Gesamtgewicht, wobei die Zerkleinerungseinheit so angeordnet ist, dass die getrocknete Schicht zu Stücken aus collagenhaltigem Material mit einem Volumen von 25-5000 mm³ zerkleinert wird.

14. Vorrichtung gemäß Anspruch 13, **dadurch gekennzeichnet, dass** bei ihrer Verwendung die Trockeneinheit die Schicht so trocknet, dass die getrocknete Schicht einen Feuchtigkeitsgehalt von 10-20% hat, bezogen auf das Gesamtgewicht.

15. Vorrichtung gemäß Anspruch 13 oder 14, **dadurch gekennzeichnet, dass** die Wascheinheit wenigstens ein Flüssigkeitsbad umfasst, in dem die Schicht bei der Verwendung der Vorrichtung gewaschen wird, wobei das Flüssigkeitsbad eine Temperatur von 10-40 °C hat.

16. Vorrichtung gemäß Anspruch 15, **dadurch gekennzeichnet, dass** das Flüssigkeitsbad eine Flüssigkeit umfasst, die bei der Verwendung der Vorrichtung die Acidität der Schicht neutralisiert.

17. Vorrichtung gemäß einem der vorstehenden Ansprüche 13-16, **dadurch gekennzeichnet, dass** die Vorrichtung weiterhin mit einer Entwässerungseinheit versehen ist, die der Wascheinheit nachgeschaltet und der Trockeneinheit vorgeschaltet in die Verarbeitungsstrecke eingefügt ist, so dass die gewaschene Schicht durch Pressen der Schicht mechanisch wenigstens teilweise entwässert wird.

18. Vorrichtung gemäß einem der vorstehenden Ansprüche 13-17, **dadurch gekennzeichnet, dass** die Trockeneinheit Einrichtungen zur Erzeugung eines Gasstroms umfasst, mittels dessen die Schicht bei der Verwendung der Vorrichtung getrocknet wird.

## Revendications

1. Méthode pour la production de morceaux secs de matière contenant du collagène à partir de tissu de peau, en particulier de tissu conjonctif de la peau d'un animal, dans laquelle les morceaux de matière contenant du collagène comprennent la structure d'origine du tissu et dans laquelle la méthode comprend au moins des étapes de traitement dans lesquelles une couche comprenant le tissu de la peau de l'animal est réduite en morceaux, lavée et séchée, **caractérisée en ce que** la couche, après lavage, est légèrement séchée à une température de 40 à 60°C, de telle façon que la couche séchée ait un taux d'humidité de 10 à 35 %, par rapport à la masse totale, et **en ce que** la couche séchée est ensuite réduite en morceaux de telle façon que les morceaux séchés de matière contenant du collagène obtenus aient un volume de 25 à 5000 mm³.

2. Méthode selon la revendication 1, **caractérisée en ce que** la couche est séchée de telle façon que la couche séchée ait un taux d'humidité de 10 à 20 % par rapport à la masse totale.

3. Méthode selon l'une quelconque des revendications précédentes, **caractérisée en ce que** la couche, avant séchage, est lavée avec un liquide ayant une température de 10 à 40°C.

4. Méthode selon la revendication 3, **caractérisée en ce que** la couche est lavée dans un bain liquide.

5. Méthode selon la revendication 3 ou 4, **caractérisée en ce que** la couche est lavée avec un liquide qui neutralise l'acidité de la couche.

6. Méthode selon la revendication 5, **caractérisée en ce que** la valeur du pH de la couche neutralisée est d'environ 6 à 8.

7. Méthode selon l'une quelconque des revendications précédentes, **caractérisée en ce que** la couche, après lavage et avant séchage, est au moins en partie déshydratée par compression de la couche.

8. Méthode selon l'une quelconque des revendications précédentes, **caractérisée en ce que** la couche comprenant du tissu de peau d'un animal est constituée par le tissu de peau éliminé pendant la transformation de la peau d'un animal, ou de parties de celle-ci, en cuir.

9. Méthode selon la revendication 8, **caractérisée en ce que** ladite couche est fabriquée directement à partir d'une peau fraîche réfrigérée ou de parties de celle-ci.

10. Méthode selon l'une quelconque des revendications précédentes, **caractérisée en ce que** la couche est séchée par un courant de gaz chauffé.

11. Méthode selon l'une quelconque des revendications précédentes, **caractérisée en ce que** la couche est réduite en morceaux par hachage ou découpage et/ou broyage.

12. Méthode selon l'une quelconque des revendications précédentes, **caractérisée en ce que** la méthode est mise en oeuvre pour plusieurs couches, lesdites couches étant traitées successivement ou par lots.

13. Appareillage pour la production de morceaux secs de matière contenant du collagène à partir de tissu de peau, en particulier du tissu conjonctif de la peau d'un animal, lesdits morceaux de matière contenant du collagène comprenant la structure d'origine du tissu et ledit appareillage étant muni d'une chaîne de traitement pour le traitement d'une couche comprenant du tissu de la peau de l'animal, ladite chaîne de traitement comprenant au moins une unité de réduction en morceaux, une unité de lavage et une unité de séchage, **caractérisé en ce que** l'unité de réduction en morceaux est placée dans la chaîne de traitement en aval de l'unité de séchage, l'unité de séchage est réglée pour sécher la couche lavée par l'unité de lavage à une température douce de 40 à 60°C, de telle façon que la couche séchée ait un taux d'humidité de 10 à 35 %, par rapport à la masse totale, ladite unité de réduction en morceaux étant réglée de telle façon que la couche séchée soit réduite en morceaux de matière contenant du collagène d'un volume de 25 à 5000 mm³.

14. Appareillage selon la revendication 13, **caractérisé en ce que**, en utilisation, l'unité de séchage sèche la couche de telle façon que la couche séchée ait un taux d'humidité de 10 à 20 % par rapport à la masse totale.

15. Appareillage selon la revendication 13 ou 14, **caractérisé en ce que** l'unité de lavage comprenne au moins un bain liquide dans lequel, en utilisation, la couche est lavée, ledit bain liquide ayant une température de 10 à 40°C.

16. Appareillage selon la revendication 15, **caractérisé en ce que** le bain liquide comprend un liquide qui, en utilisation, neutralise l'acidité de la couche.

17. Appareil selén l'une quelconque des revendications précédentes 13 à 16, **caractérisé en ce que** l'appareil est en outre doté d'une unité de déshydratation qui, en aval de l'unité de lavage et en amont de l'unité de séchage, est incluse dans la chaîne de traitement pour, au moins en partib, déshydrater la couche lavée mécaniquement par compression de la couche.

18. Appareil selon l'une quelconque des revendications précédentes 13 à 17, **caractérisé en ce que** l'unité de séchage comprend un moyen pour la génération d'un courant de gaz par lequel la couche, en utilisation, est séchée.
